(19) Europäisches Patentamt

European Patent Office

Office européen des brevets

(11) **EP 1 014 637 B1**

(12) **FASCICULE DE BREVET EUROPEEN**

(45) Date de publication et mention
de la délivrance du brevet:
**03.05.2006 Bulletin 2006/18**

(51) Int Cl.:
***H04L 27/152*** (2006.01)

(21) Numéro de dépôt: **98124582.2**

(22) Date de dépôt: **23.12.1998**

(54) **Récepteur à conversion directe pour signaux modulés en sauts de fréquence (FSK)**

Direktmischempfänger für FSK-modulierte Signale

Direct conversion receiver for FSK modulated signals

(84) Etats contractants désignés:
**CH DE FR GB IT LI NL**

(43) Date de publication de la demande:
**28.06.2000 Bulletin 2000/26**

(73) Titulaire: **ASULAB S.A.**
**CH-2501 Bienne (CH)**

(72) Inventeur: **Casagrande, Arnaud**
**2523 Lignières (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 0 305 125           EP-A- 0 405 676**
**US-A- 4 437 068           US-A- 5 640 428**

## Description

La présente invention concerne le domaine technique des récepteurs pouvant démoduler des signaux électriques et, plus précisément, des récepteurs à conversion directe pour signaux modulés en sauts de fréquence.

En se référant à la figure 1 de la présente description, le brevet EP 0.405.676 décrit un récepteur 1 comprenant connectés en série une antenne 2, un moyen de conversion directe 3, deux amplificateurs limiteurs 28 et 30, un moyen de démodulation 5 et une mémoire bistable 6.

L'antenne 2 reçoit un signal S modulé par sauts de fréquence et fournit ce signal. Dans la présente description, on rappelle qu'une « modulation par sauts de fréquence » dite « modulation FSK » (acronyme provenant de l'anglais « Frequency-Shift Keying ») est une modulation permettant la fourniture d'un signal à une fréquence égale à une valeur $fp+\Delta f1$ pour transmettre l'un des deux états du signal, et à une autre valeur $fp-\Delta f1$ pour transmettre l'autre état, les références $fp$ et $\Delta f1$ désignant respectivement une fréquence porteuse nominale et une fréquence de décalage. Pour un débit de données égal à 512 bits/s, les fréquences $fp$ et $\Delta f1$ valent respectivement 400 MHz et 4.5 kHz.

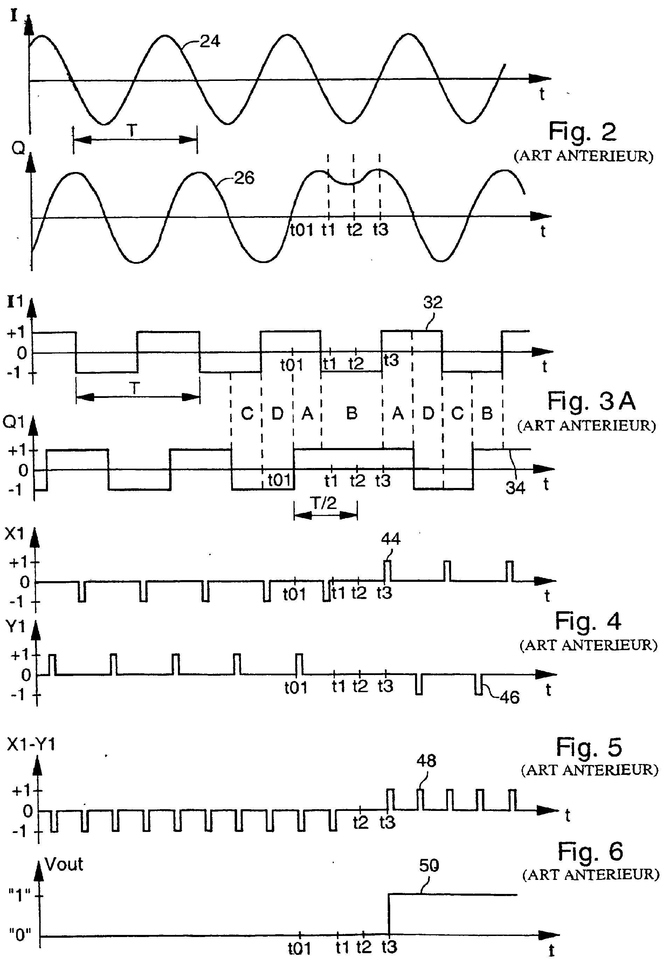

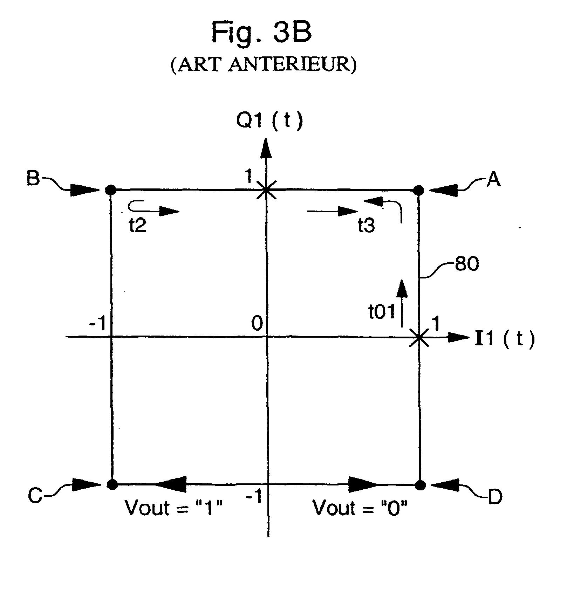

Le moyen de conversion 3 comprend deux mélangeurs 12 et 14, un oscillateur local 16, un déphaseur de 90 ° et deux filtres passe-bas 20 et 22. L'oscillateur 16 fournit une fréquence $fL$ qui est idéalement égale à la fréquence porteuse $fp$. Le mélangeur 12 (respectivement 14) comprend une première borne d'entrée pour recevoir le signal S, une deuxième borne d'entrée pour recevoir la fréquence $fL$, et une borne de sortie connecté au filtre 20 (respectivement 22). En outre, le mélangeur 14 est connecté à l'oscillateur 16, par l'intermédiaire du déphaseur 18. Il résulte de cet agencement que, si la fréquence du signal S vaut $fp+\Delta f1$, les fréquences fournies par les mélangeurs 12 et 14 valent respectivement $+\Delta f1$ et $+\Delta f1-\pi/2$ et que, si la fréquence du signal S vaut $fp-\Delta f1$, les fréquences fournies par les mélangeurs 12 et 14 valent respectivement $-\Delta f1$ et $-\Delta f1-\pi/2$. Le filtre 20 (respectivement 22) peut recevoir la fréquence fournie par le mélangeur 12 (respectivement 14) et, en réponse, fournir un signal I (respectivement un signal Q). On rappelle que les signaux I et Q représentent les parties réelle et imaginaire d'un signal complexe ayant une fréquence négative (dans ce cas $-\Delta f1$) ou une fréquence positive (dans ce cas $+\Delta f1$). La figure 2 de la présente description représente deux chronogrammes 24 et 26 illustrant les signaux I et Q, respectivement. Comme le représente la figure 2, les signaux I et Q sont des signaux analogiques ayant des formes d'ondes sensiblement sinusoïdales et en quadrature phase. On note la présence d'un changement de phase du signal Q, comme l'illustre le chronogramme 26.

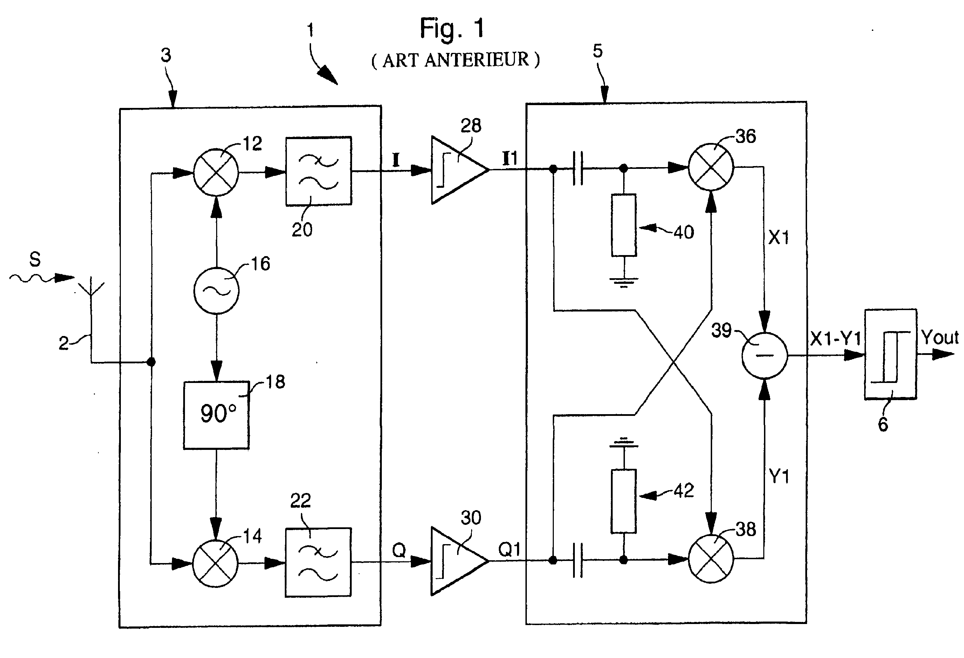

En se référant à nouveau à la figure 1, les amplificateurs limiteurs 28 et 30 peuvent recevoir les signaux I et Q et, en réponse, fournir des signaux I1 et Q1, respectivement. On rappelle qu'un amplificateur limiteur reçoit un signal d'entrée, et fournit un signal de sortie dont l'amplitude n'augmente pratiquement plus au-delà d'une amplitude déterminée du signal d'entrée. La figure 3A de la présente description représente deux chronogrammes 32 et 34 illustrant les signaux I1 et Q1, respectivement. Comme le représente la figure 3A, les signaux I1 et Q1 sont des signaux numériques ayant des formes d'ondes décalées l'une de l'autre et rectangulaires, les amplitudes des signaux I1 et Q1 valant -1 ou +1.

La figure 3B représente une courbe 80 illustrant la relation entre les valeurs instantanées $I1(t)$ et $Q1(t)$ des signaux I1 et Q1 à un instant t. Comme le représente la figure 3B, la courbe 80 a une forme rectangulaire dont les sommets sont formés par quatre points A à D. On note qu'une évolution temporelle de ces signaux se traduit par un parcours le long de cette courbe, de sorte que, quand le signal Vout vaut 0 (respectivement 1), les signaux I1 et Q1 sont représentés successivement par les points A, B, C, D, A... (respectivement A, D, C, B, A...), c'est-à-dire un parcours selon le sens trigonométrique (respectivement selon le sens inverse au sens trigonométrique).

En se référant à nouveau à la figure 1, le moyen de démodulation 5 comprend connectés en série un circuit différentiateur 40 (respectivement 42), un multiplicateur 36 (respectivement 38) et un soustracteur 39.

Le multiplicateur 36 (respectivement 38) comprend une première borne d'entrée pour recevoir le signal Q1 (respectivement I1), et une deuxième borne d'entrée pour recevoir le signal I1 (respectivement Q1), par l'intermédiaire du circuit différentiateur 40 (respectivement 42). Le multiplicateur 36 (respectivement 38) est agencé pour fournir le signal X1 (respectivement Y1). La figure 4 de la présente description représente deux chronogrammes 44 et 46 illustrant les signaux X1 et Y1, respectivement. Comme le représente la figure 4, le signal X1 contient des premières impulsions, et le signal Y1 contient des deuxièmes impulsions décalées par rapport aux premières impulsions. Le soustracteur 39 comprend une première borne d'entrée pour recevoir le signal X1 et une deuxième borne d'entrée pour recevoir le signal Y1. Le soustracteur 39 est agencé pour fournir un signal X1-Y1 égal à la différence entre les signaux X1 et Y1. La figure 5 de la présente description représente un chronogramme 48 illustrant le signal X1-Y1. Comme le représente la figure 5, le signal X1-Y1 contient les impulsions résultant de la différence entre les signaux X1 et Y1. On note que, avant le changement de phase du signal Q, le signal X1-Y1 contient des impulsions négatives et que ce changement de phase provoque la fourniture d'impulsions positives.

La mémoire bistable 6 comprend une borne d'entrée pour recevoir le signal X1-Y1, et une borne de sortie pour fournir en réponse un signal Vout. La figure 6 de la présente description représente un chronogramme 50 illustrant le signal Vout. Comme le représente la figure 6, le signal Vout est égal à un niveau « 0 » ou à un niveau « 1 ». On note que, dès qu'une impulsion positive apparaît sur le signal X1-Y1 le signal Vout commute du niveau « 0 » au niveau « 1 », et demeure à ce niveau, indépendamment de la différence ultérieure de fréquences entre les signaux X1 et Y1.

On va maintenant décrire brièvement le fonctionnement du récepteur 1, à l'aide des figures 1 à 6 déjà citées.

Jusqu'à un instant t01, les signaux I1 et Q1 sont périodiques de période T, le signal I1 étant en avance sur le signal Q1, de sorte que le signal Vout vaut 0. Les signaux I1 et Q1 sont représentés successivement par les points A, B, C, D, A... Ainsi, à l'instant t01, le signal Q1 devient égal à 1. A un instant t1 ultérieur à l'instant t01 et antérieur à un instant t01+T/2, une nouvelle information est présente dans le signal Q, de sorte que la temporisation des signaux I1 et Q1 est inversée au-delà de l'instant t01+T/2 (c'est-à-dire les signaux I1 et Q1 sont représentés successivement par les points B, A, D, C, B...). On note que la commutation du signal Vout a lieu lors de la commutation suivante du signal I1 au niveau « -1 », c'est-à-dire à un instant t3. Autrement dit, il existe un retard entre l'instant où l'information est contenue dans le signal Q (c'est-à-dire l'instant t1) et l'instant où l'information est contenue dans le signal Vout (c'est-à-dire l'instant t3). On note que ce retard est compris entre T/2 et T, ce qui nécessite un rapport Δf/D élevé, la référence Δf désignant la fréquence de décalage (égale dans ce cas à Df1) et la référence D désignant le débit binaire. Ainsi un inconvénient du récepteur 1 est d'avoir un rapport Δf/D élevé : un bit est typiquement fourni toutes les quatre périodes.

Pour pallier un tel inconvénient, il existe dans l'état de la technique des récepteurs de signaux modulés FSK réalisant une démodulation directement à partir des signaux analogiques I et Q fournis par le moyen de conversion.

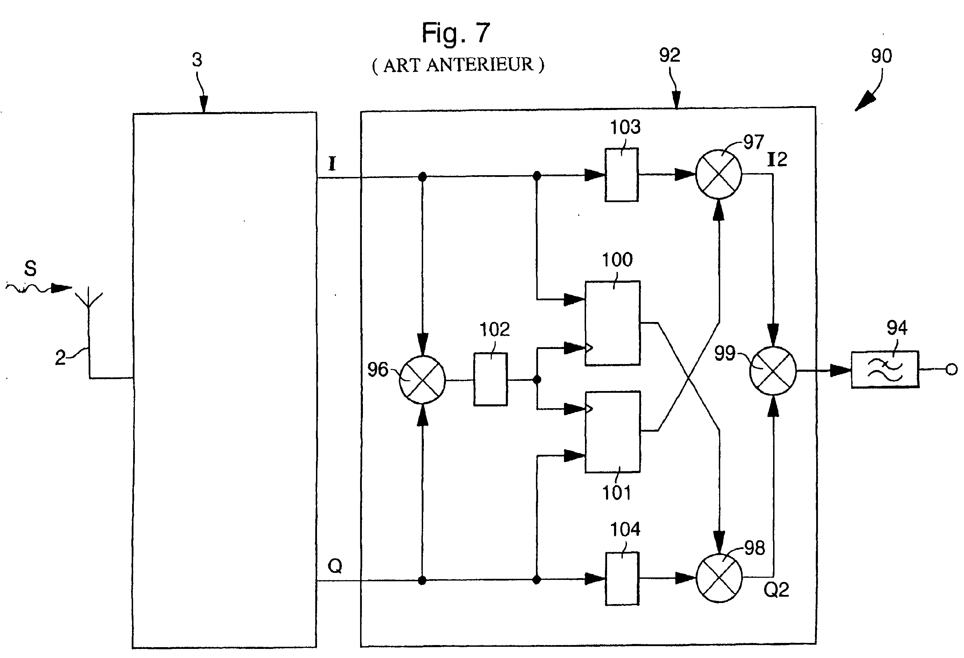

En se référant à la figure 7 de la présente description, le brevet US 5.640.428 décrit un récepteur 90 comprenant une antenne 2, un moyen de conversion 3, un moyen de démodulation 92 et un filtre passe-bas 94. On note que des objets de la figure 7 similaires à ceux décrits en relation avec la figure 1 ont été désignés par les mêmes références. Comme le représente la figure 7, le moyen de démodulation 92 comprend quatre mélangeurs 96 à 99, deux circuits de maintien 100 et 101 et trois circuits à retard 102 à 104. On note que le récepteur 90 réalise une démodulation d'un signal S reçu par l'antenne 2, par un traitement analogique de ce signal. Toutefois ce traitement est réalisé par des éléments de traitement numérique (signaux d'horloge, bascules), à l'instar du récepteur 1 de la figure 1.

En outre, un inconvénient des récepteurs 1 et 90 est que les moyens de démodulation 5 et 92 contiennent des multiplicateurs qui sont des composants ayant une structure complexe (notamment deux bornes d'entrée) c'est-à-dire des composants difficiles à fabriquer.

Un objet de la présente invention est de prévoir un récepteur de signaux modulés FSK palliant les inconvénients susmentionnés. Notamment un tel récepteur réalisant une démodulation instantanée sur la base de signaux analogiques.

Un autre objet de la présente invention est de prévoir un récepteur de signaux modulés FSK réalisant la démodulation d'informations reçues avec un rapport Δf/D minimum (typiquement inférieur à 1).

Un autre objet de la présente invention est de prévoir un récepteur de signaux modulés FSK comprenant un moyen de démodulation dépourvu de multiplicateurs.

Un autre objet de la présente invention est de prévoir un récepteur de signaux modulés FSK répondant aux critères de rationalité, d'encombrement et de coût, qui sont traditionnels dans l'industrie des semi-conducteurs.

Ces objets, ainsi que d'autres, sont atteints par le récepteur selon la revendication 1.

Un avantage du filtre complexe d'un tel récepteur est de pouvoir être réalisé par des composants semi-conducteurs simples à fabriquer, sans former de multiplicateurs ou de mélangeurs à plusieurs entrées, à l'instar des récepteurs classiques.

Un autre avantage du filtre d'un tel récepteur est de filtrer la moitié du bruit provenant du signal modulé, ce qui diminue notablement l'influence du bruit sur le signal de sortie du récepteur.

Ces objets, caractéristiques et avantages, ainsi que d'autres, de la présente invention apparaîtront plus clairement à la lecture de la description détaillée d'un mode de réalisation préféré de l'invention, donné à titre d'exemple uniquement, en relation avec les figures jointes, parmi lesquelles :

- la figure 1 déjà citée représente un premier récepteur classique;
- les figures 2, 3A et 4 déjà citées représentent chacune deux chronogrammes illustrant des signaux électriques présents dans le récepteur de la figure 1;
- la figure 3B déjà citée représente une courbe illustrant la relation entre les deux signaux électriques de la figure 3A;
- les figures 5 et 6 déjà citées représentent chacune un chronogramme illustrant un signal électrique présent dans le récepteur de la figure 1;
- la figure 7 déjà citée représente un deuxième récepteur classique;
- la figure 8 représente un récepteur selon la présente invention;
- la figure 9 représente un mode réalisation d'un filtre du récepteur de la figure 8;
- la figure 10 représente une courbe illustrant le gain du filtre de la figure 9, en relation avec une modulation à deux sauts de fréquence;
- la figure 11 représente une courbe illustrant la relation entre deux signaux électriques fournis par le filtre de la figure 9, en relation avec une modulation à deux sauts de fréquence;

- la figure 12 représente dix chronogrammes illustrant des signaux électriques présents dans le récepteur de la figure 8;
- la figure 13 représente une courbe illustrant le gain du filtre de la figure 9, en relation avec une modulation à quatre sauts de fréquences; et
- la figure 14 représente une courbe illustrant la relation entre deux signaux électriques fournis par le filtre de la figure 9, en relation avec une modulation à quatre sauts de fréquences.

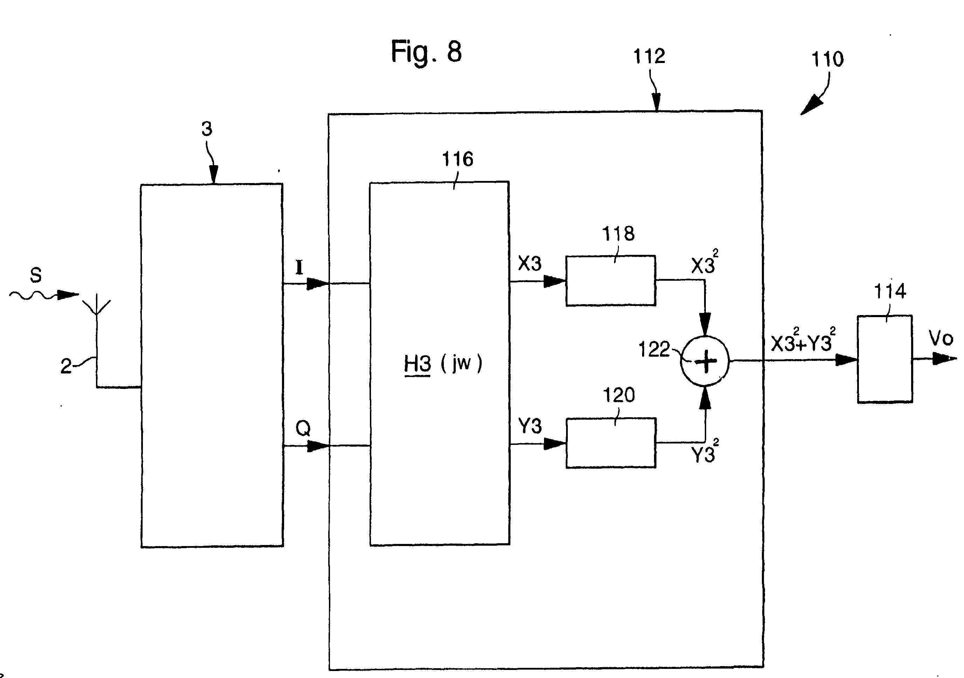

La figure 8 représente un récepteur 110 selon la présente invention comprenant une antenne 2, un moyen de conversion 3, un moyen de démodulation 112 et un moyen de mise en forme 114. Comme le représente la figure 8, le moyen de démodulation 112 comprend un filtre complexe 116, deux moyens de normalisation 118 et 120 et un sommateur 122

On note que des objets de la figure 8 similaires à ceux décrits en relation avec la figure 1 ont été désignés par les mêmes références. Toutefois les filtres 20 et 23 du moyen de conversion 3 tel que décrit en relation avec la figure 1 ne sont pas nécessaires à la réalisation du récepteur 110, la fonction de ces filtres étant assurée par le filtre complexe 116.

Le filtre complexe 116 est agencé pour recevoir les signaux analogiques I et Q fournis par le moyen de conversion 3, comme cela a déjà été décrit de façon plus détaillée en relation avec la figure 1. Le filtre complexe 116 est également agencé pour fournir deux signaux analogiques X3 et Y3 de sorte que les signaux I, Q, X3 et Y3 sont liées par la relation suivante :

$$X3 + jY3 = \underline{H3}(jf)^{*}(I + jQ)$$

où la référence f désigne la fréquence et que la référence $\underline{H3}(jf)$ désigne la fonction de transfert associée au filtre complexe 116. Le filtre complexe 116 est également agencé de sorte que les valeurs du gain $|\underline{H3}(jf)|$ pour la fonction de transfert $\underline{H3}(jf)$ sont différentes pour les différentes fréquences de décalage. Dans le cas présent, ces fréquences de décalage étant $-\Delta f1$ et $+\Delta f1$, on a : $|\underline{H3}(-j\Delta f1)| \neq |\underline{H3}(+j\Delta f1)|$.

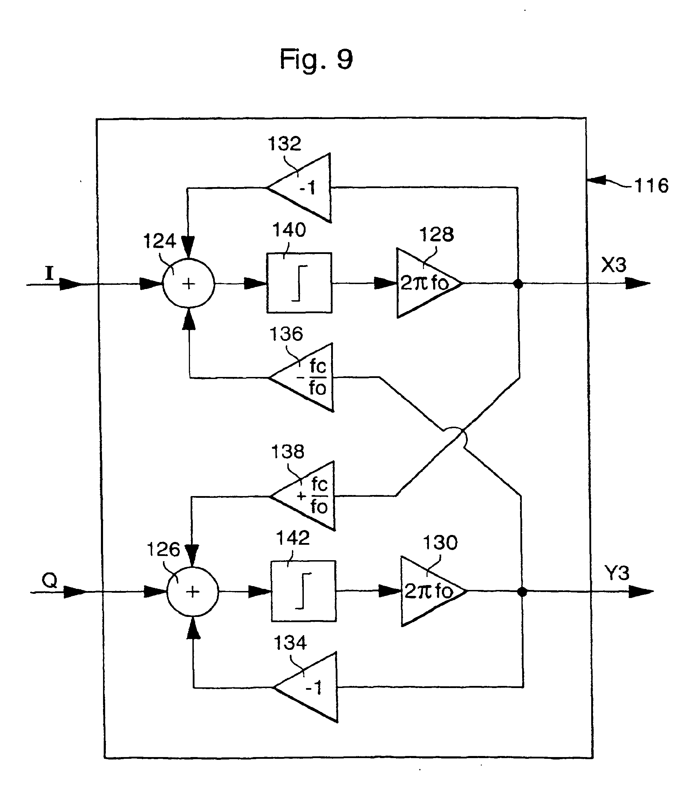

La figure 9 représente un mode réalisation du filtre complexe 116 comprenant deux sommateurs 124 et 126, six amplificateurs 128, 130, 132, 134, 136 et 138, et deux intégrateurs 140 et 142. On note que les gains des amplificateurs 128 et 130 valent fo, que ceux des amplificateurs 132 et 134 valent -1 et que ceux des amplificateurs 136 et 138 valent -fc/fo.

Le sommateur 124, l'intégrateur 140 et l'amplificateur 128 sont connectés en série, et agencés de sorte que le sommateur 124 reçoit le signal analogique I et que l'amplificateur 128 fournit le signal X3. Le sommateur 124 reçoit également le signal X3 par l'intermédiaire de l'amplificateur 132. De même, le sommateur 126, l'intégrateur 142 et l'amplificateur 130 sont connectés en série, et agencés de sorte que le sommateur 126 reçoit le signal analogique Q et que l'amplificateur 130 fournit le signal Y3. Le sommateur 126 reçoit également le signal Y3 par l'intermédiaire de l'amplificateur 134. En outre, le sommateur 124 reçoit également le signal Y3 par l'intermédiaire de l'amplificateur 136, et le sommateur 126 reçoit également le signal X3 par l'intermédiaire de l'amplificateur 138.

On réalise de préférence le moyen de conversion 3 et le moyen de démodulation 112 en formant des composants (réalisables par une technologie de type CMOS), de sorte que les amplitudes des signaux X3 et Y3 sont égales. A titre de perfectionnement, le récepteur 110 peut comprendre deux amplificateurs à gain variable (connus en soi) connectés de sorte que le moyen de conversion 3 fournit au moyen de démodulation 112 le signal I (respectivement le signal Q), par l'intermédiaire de l'un de ces amplificateurs (respectivement de l'autre de ces amplificateurs).

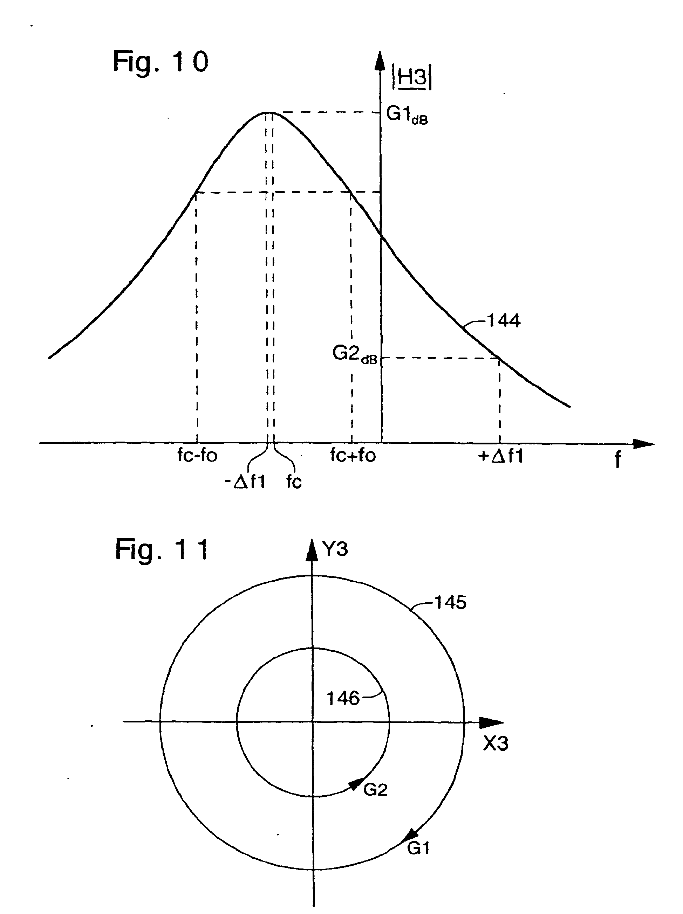

La figure 10 représente une courbe 144 illustrant le gain $|(jf)|$ relatif au filtre 161 tel que représenté en figure 9. On note en figure 10 que le gain $|\underline{H3}(jf)|$ est représenté selon une échelle logarithmique, et que la fréquence f est représentée selon une échelle linéaire. La courbe 144 est centrée sur la fréquence fc, de sorte que la fonction de transfert $\underline{H3}(jf)$ est asymétrique. L'homme du métier note que le filtre 116 peut être considéré comme un filtre passe-bande dont les fréquences de coupure valent fc-fo et fc+fo. On note qu'il résulte de l'asymétrie de cette fonction de transfert que le gain $|\underline{H3}(jf)|$ vaut +G1 quand la fréquence f vaut $-\Delta f1$, que le gain $|\underline{H3}(jf)|$ vaut +G2 quand la fréquence f vaut $+\Delta f1$, et que +G1 $\neq$ +G2. On note également que le bruit issu du signal modulé S, et correspondant aux fréquences positives est filtré, ce qui diminue notablement l'influence du bruit sur les signaux X3 et Y3 fournis par le filtre 113.

La figure 11 illustre la relation entre les valeurs instantanées X3(t) et Y3(t) des signaux X3 et Y3 à un instant t. Comme le représente la figure 11, au cours du temps t, les valeurs instantanées X3(t) et Y3(t) décrivent un premier cercle ou cercle 145 et un deuxième cercle ou cercle 146. On note que, dans le cas où les amplitudes maximales (respectivement minimales) des signaux et Q valent 1 (respectivement -1), le rayon du cercle 146 vaut +G2 et le rayon du cercle 145 vaut +G1. On notera qu'une évolution temporelle de ces signaux se traduit par un parcours le long de ces cercles, de sorte que, quand les signaux X3 et Y3 décrivent le cercle 146 (respectivement le cercle 145) selon le sens trigonométrique (respectivement selon le sens inverse au sens trigonométrique), le signal Vout vaut 0 (respectivement 1).

En se référant à nouveau à la figure 8, le moyen de normalisation 118 est agencé pour recevoir le signal analogique X3 et, en réponse, fournir un signal représentant une norme du signal X3. De préférence, on réalise le moyen de conversion 118 par des composants semiconducteurs (réalisables en technologie de type CMOS) de sorte que cette norme correspond à la fonction carrée. Ainsi, à titre illustratif uniquement, dans la suite de la description, la référence $X3^2$ désigne le signal représentant cette norme du signal X3.

De même, le moyen de normalisation 120 est agencé pour recevoir le signal analogique Y3 et, en réponse, fournir un signal représentant la même norme du signal Y3. De préférence, on réalise le moyen de conversion 118 par des composants semiconducteurs de sorte que cette norme correspond à la fonction carrée. Ainsi, à titre illustratif uniquement, dans la suite de la description, la référence $Y3^2$ désigne le signal représentant cette norme du signal Y3.

Le sommateur 122 est agencé pour recevoir les signaux $X3^2$ et $Y3^2$ et, en réponse, pour fournir un signal $X3^2+Y3^2$ représentant la somme des signaux $X3^2$ et $Y3^2$. On note que le signal $X3^2+Y3^2$ est un signal analogique.

En se référant à nouveau à la figure 8, le moyen de mise en forme 114 est agencé pour recevoir le signal analogique $X3^2+Y3^2$ et, en réponse, fournir un signal numérique Vo égale à un niveau « 0 » (respectivement un niveau « 1 »), quand le signal $X3^2+Y3^2$ est inférieur (respectivement supérieur) à un seuil prédéterminé. On réalise de préférence le moyen de mise en forme 114 en formant un comparateur à seuil, ce seuil correspondant au seuil prédéterminé et étant choisi pour être compris entre les valeurs $+G1^2$ et $+G2^2$.

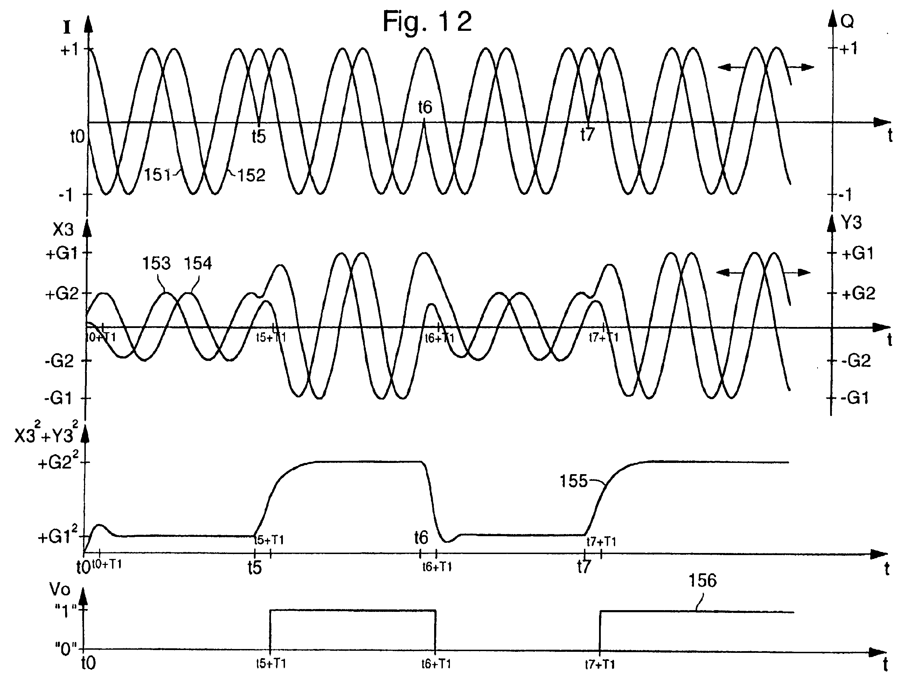

On va maintenant décrire le fonctionnement du récepteur 110 à l'aide de la figure 12 qui représente six chronogrammes 151 à 156.

Considérons à un instant initial t0 que l'antenne 2 reçoit un signal à la fréquence $fp+\Delta f1$. Il en résulte que le moyen de conversion 3 fournit les signaux I et Q de sorte que ces signaux ont des formes d'onde sinusoïdales de période T (correspondant à la fréquence $+\Delta f1$) et en quadrature de phase, le signal Q étant en avance sur le signal I. A titre d'exemple, on suppose que les amplitudes maximales et minimales des signaux et Q vaut 1. Le filtre complexe 116 reçoit ces signaux I et Q et fournit en réponse les signaux X3 et Y3 de sorte que : $X3+jY3 = \underline{H3}(jf)*(I+jQ)$. Ainsi, étant donné que la fréquence f des signaux I et Q vaut $+\Delta f1$, le gain $|\underline{H3}(jf)|$ vaut $+G2$, comme cela a déjà été décrit en relation avec la figure 10. Il en résulte que, au-delà de l'instant t0, les valeurs X3(t) et Y3(t) des signaux X3 et Y3 décrivent le cercle 146, c'est-à-dire que les signaux X3 et Y3 ont des formes d'onde sinusoïdales à la fréquence $+\Delta f1$ et en quadrature de phase, le signal Y3 étant en avance sur le signal X3. On note que les signaux X3 et Y3 sont proportionnels aux signaux respectifs I et Q, mais en retard d'une période T1 par rapport à ces derniers, et qu'ils ont des amplitudes minimales et maximales égales à $+G2$ et $-G2$, respectivement. Ainsi, au-delà de l'instant t0, les moyens de normalisation 118 et 120 fournissent respectivement les signaux $X3^2$ et $Y3^2$ au sommateur 122, et ce dernier fournit en réponse le signal $X3^2+Y3^2$ égal, dans ce cas, à $+G2^2$. Et le moyen de mise en forme 114 fournit en réponse le signal Vo égal au niveau « 0 ».

Considérons à un instant t5 ultérieur à l'instant t0 que l'antenne 2 reçoit un signal à la fréquence $fp-\Delta f1$, ce qui provoque une modification de la forme d'onde du signal Q fourni par le moyen de conversion 3. En réponse, le filtre complexe 116 fournit les signaux X3 et Y3 de sorte que le gain $|\underline{H3}(jf)|$ vaut $+G1$, étant donné que la fréquence f des signaux I et Q vaut $-\Delta f1$. Il en résulte que, au-delà de l'instant t5, les valeurs X3(t) et Y3(t) des signaux X3 et Y3 décrivent le cercle 145, c'est-à-dire que les signaux X3 et Y3 ont des formes d'onde sinusoïdales à la fréquence $-\Delta f1$ et en quadrature de phase. On note que les signaux X3 et Y3 sont proportionnels aux signaux I et Q, respectivement, et ont des amplitudes minimales et maximales égales à $+G1$ et $-G1$. Ainsi, au-delà de l'instant t5, les moyens de normalisation 118 et 120 fournissent respectivement les signaux $X3^2$ et $Y3^2$ au sommateur 122, et ce dernier fournit en réponse le signal $X3^2+Y3^2$ égal, dans ce cas, à $+G1^2$. Et le moyen de mise en forme 114 fournit en réponse le signal Vo égal au niveau « 1 ». On note que la transition entre les niveaux « 0 » et « 1 » a lieu par des variations continues des signaux X3 et Y3 à l'instant t7, comme le représente la figure 11.

De même, à un instant t6 ultérieur à l'instant t5, l'antenne 2 reçoit un signal à la fréquence $fp+\Delta f1$. La situation est similaire à celle décrite pour l'instant t0. Il en résulte que, au-delà de l'instant t5, le moyen de mise en forme 114 fournit en réponse le signal Vo égal au niveau « 0 ».

De même, à un instant t7 ultérieur à l'instant t6, l'antenne 2 reçoit un signal à la fréquence $fp-\Delta f1$. La situation est similaire à celle décrite pour l'instant t5. Il en résulte que, au-delà de l'instant t7, le moyen de mise en forme 114 fournit en réponse le signal Vo égal au niveau « 1 ».

On note que, à l'instant où les signaux I et Q contiennent une information ($-\Delta f1$ ou $+\Delta f1$) provenant de l'antenne 2, cette information est fournie au même instant au moyen de démodulation 112, contrairement au récepteur classique 1 dans lequel l'information n'est fournie au moyen de conversion 5 qu'au demi-cycle suivant (occasionnant un retard égal à T/2, la référence T désignant la période des signaux I1 et Q1, comme cela a été décrit en relation avec les figures 1 à 6).

On note également que le retard T1 entre l'instant où l'information est fournie par le moyen de conversion 3 et l'instant où l'information est contenue dans le signal Vo est essentiellement dû au temps de réponse du filtre, complexe 116, c'est-à-dire au temps de réponse des intégrateurs 140 et 142 de ce filtre. Ceci est particulièrement avantageux, puisque que plusieurs informations peuvent ainsi être reçues par l'antenne 2 et fournies sous la forme de signal Vo, au cours d'un même demi-cycle (par exemple aux instants t6 et t7). Il en ressort que le récepteur 110 peut fonctionner avec un faible rapport Δf/D (dans cet exemple, inférieur à 1), ce qui permet la fourniture d'au moins quatre bits au cours d'une période du signal Vo. On note également qu'un avantage de la fonction de transfert H3(jf) est de permettre une démodulation des signaux I et Q, à partir d'une relation d'amplitude liée au gain |H3(jf)|, puisque : |H3(-j Δf1)| = +G1 ≠ +G2 = |H3(+j Δf1)|.

Un autre avantage du récepteur 110 est de pouvoir réaliser une démodulation de signaux modulés FSK avec N sauts de fréquence désignés $\Delta f_1$, $\Delta f_2$,... $\Delta f_N$, sans modification structurelle de ce récepteur (à l'exception du moyen de mise en forme 114 réalisé, dans ce cas, par un comparateur à N-1 seuils).

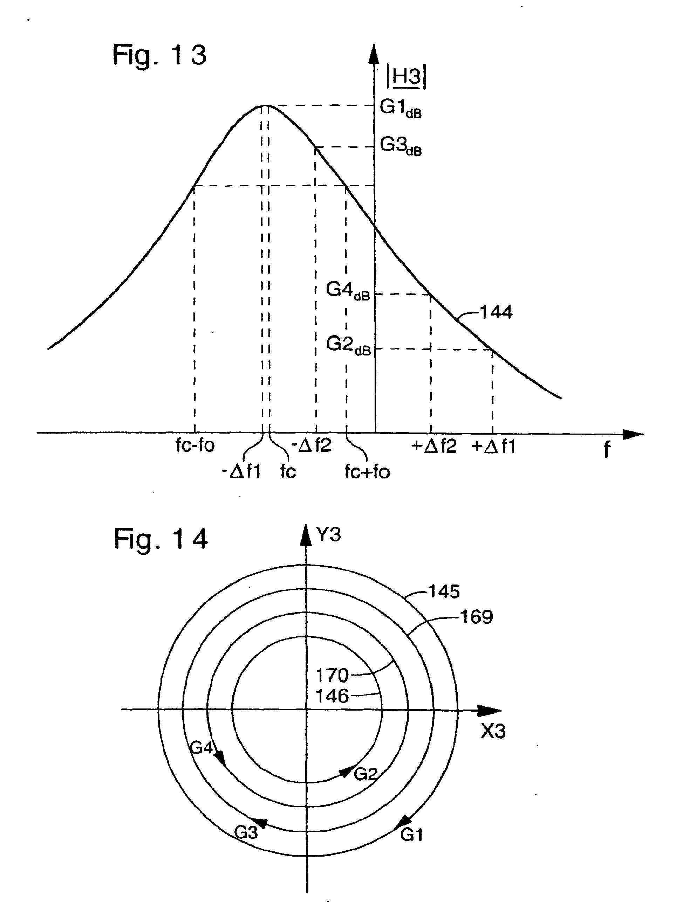

En effet, considérons le cas où N=4 et plus particulièrement le cas où $\Delta f_1$ = Δf1, $\Delta f_2$= +Δf1, $\Delta f_3$= -Δf2, $\Delta f_4$= +Δf2. En se référant à la figure 13 qui représente la courbe du gain |H3(jf)| (c'est-à-dire la courbe 144 de la figure 10), on note que le gain |H3(jf)| vaut G3 quand la fréquence f vaut -Δf2, et que le gain |H3(jf)| vaut G4 quand la fréquence f vaut +Δf2. La figure 14 représente la relation entre les valeurs instantanées X3(t) et Y3(t) des signaux X3 et Y3 à un instant t, en relation avec la figure 13 . Ainsi, outre les cercles 145 et 146 déjà décrits en relation avec la figure 11, les valeurs X3(t) et Y3(t) peuvent décrire un troisième cercle ou cercle 169 et un quatrième cercle ou cercle 170. On note que, dans le cas où les amplitudes maximales (respectivement minimales) des signaux I et Q valent 1 (respectivement -1), le rayon du cercle 169 vaut G3 et le rayon du cercle 170 vaut G4. On note qu'une évolution temporelle de ces signaux se traduit par un parcours le long de ces cercles, de sorte que, quand les signaux X3 et Y3 décrivent le cercle 145 et 169 selon le sens inverse au sens trigonométrique, le signal Vo vaut respectivement « 0 », « 1 », et que, quand les signaux X3 et Y3 décrivent le cercle 170 et 146 selon le sens trigonométrique, le signal Vo vaut respectivement « 3 », « 4 ».

Il va de soi pour l'homme de l'art que la description détaillée ci-dessus peut subir diverses modifications sans sortir du cadre de la présente invention. A titre d'exemple, les moyens de normalisation du récepteur selon la présente invention peuvent être agencés pour fournir en tant que norme la fonction « valeur absolue », ou la fonction « puissance 2m », la référence m étant un nombre entier supérieur ou égal à 2.

**Revendications**

1. Récepteur (110) à conversion directe pour signaux modulés en sauts de fréquence, ce récepteur comprenant :

   - une antenne (2) pouvant recevoir un signal modulé (S) en sauts de fréquence;
   - un moyen de conversion (3) pouvant recevoir ledit signal modulé et fournir en réponse des premier et deuxième signaux (I, Q) analogiques et en quadrature de phase, ces signaux étant représentatifs des parties réelle et imaginaire d'un signal complexe ayant au moins une première fréquence négative (-Δf1) ou une deuxième fréquence positive (+Δf1);
   - un moyen de démodulation (112) pouvant recevoir lesdits premier et deuxième signaux et fournir en réponse un troisième signal $(X3^2+Y3^2)$ représentatif de l'information contenue dans ledit signal modulé, ce récepteur étant **caractérisé en ce que** ledit moyen de démodulation comprend :
   - un filtre complexe (116) agencé pour recevoir lesdits premier et deuxième signaux, et fournir en réponse des quatrième et cinquième signaux (X3, Y3) analogiques de sorte que, quand la fréquence desdits premier et deuxième signaux est égale à ladite première fréquence, respectivement à ladite deuxième fréquence, le gain de la fonction de transfert (H3) est égal à une première valeur de gain (G1), respectivement à une deuxième valeur de gain (G2) différente de ladite première valeur de gain;
   - des premier et deuxième moyens de normalisation (118, 120) agencés pour recevoir respectivement lesdits quatrième et cinquième signaux, et fournir en réponse un sixième signal $(X3^2)$ analogique, respectivement un septième signal $(Y3^2)$ analogique, représentant une norme dudit quatrième signal, respectivement dudit cinquième signal; et
   - un premier sommateur (122) agencé pour recevoir lesdits sixième et septième signaux et fournir en réponse ledit troisième signal $(X3^2+Y3^2)$ analogique représentant la somme desdits sixième et septième signaux.

2. Récepteur (110) selon la revendication 1, **caractérisé en ce que** ledit filtre complexe (116) comprend :

   - un deuxième sommateur (124), un premier intégrateur (140) et un premier amplificateur (128) connectés en série, ledit deuxième sommateur pouvant recevoir ledit premier signal (I) et ledit premier amplificateur pouvant fournir ledit quatrième signal (X3);
   - un troisième sommateur (126), un deuxième intégrateur (142) et un deuxième amplificateur (130) connectés en série, ledit troisième sommateur pouvant recevoir ledit deuxième signal (Q) et ledit deuxième amplificateur pouvant fournir ledit cinquième signal (Y3); et
   - des troisième, quatrième, cinquième et sixième amplificateurs (132, 136, 134, 138), ledit deuxième sommateur recevant également ledit quatrième signal (X3) par l'intermédiaire dudit troisième amplificateur (132), ainsi que ledit cinquième signal (Y3) par l'intermédiaire dudit quatrième amplificateur (136), et ledit troisième sommateur recevant également ledit cinquième signal (Y3) par l'intermédiaire dudit cinquième amplificateur (134), ainsi que ledit quatrième signal (X3) par l'intermédiaire dudit sixième amplificateur (138).

3. Récepteur (110) selon la revendication 2, **caractérisé en ce qu'**il comprend outre des premier et deuxième amplificateurs à gain variable connecté de sorte que ledit moyen de conversion (3) fournit audit moyen de démodulation (112) lesdits premier et deuxième signaux (I, Q), par l'intermédiaire desdits premier et deuxième amplificateurs à gain variable, respectivement.

4. Récepteur (110) selon la revendication 1, **caractérisé en ce que** lesdits premier et deuxième moyens de normalisation (118, 120) sont agencés de sorte que ladite norme correspond à une fonction « puissance 2m », la référence m désignant un nombre entier non nul.

5. Récepteur (110) selon la revendication 1, **caractérisé en ce que** lesdits premier et deuxième moyens de normalisation (118, 120) sont agencés de sorte que ladite norme correspond à la fonction « valeur absolue ».

6. Récepteur (110) selon la revendication 1, **caractérisé en ce qu'**il comprend en outre un moyen de mis en forme (114) agencé pour recevoir ledit septième signal ($X3^2+Y3^2$) et fournir en réponse un huitième signal (Vo) numérique, de sorte que ce dernier est égal à un niveau bas (« 0 »), respectivement à un niveau haut (« 1 »), quand ledit septième signal est inférieur, respectivement supérieur, à un seuil prédéterminé compris entre les normes desdites première et deuxième valeurs de gain.

7. Récepteur (110) selon la revendication 6, **caractérisé en ce que** le moyen de mis en forme (114) est formé par un comparateur à N-1 seuils, la référence N désignant un nombre entier supérieur ou égal à 2, correspondant au nombre de sauts de fréquence.

**Claims**

1. Direct conversion receiver (110) for frequency shift keying modulated signals, said receiver including:

   - an antenna (2) able to receive a frequency shift keying modulated signal (S);
   - conversion means (3) able to receive said modulated signal and to provide in response first and second analog signals (I, Q) in phase quadrature, these signals being representative of the real and imaginary parts of a complex signal having at least a first negative frequency ($-\Delta f1$) or a second positive frequency ($+\Delta f1$);
   - demodulation means (112) able to receive said first and second signals and to provide in response a third signal ($X3^2+Y3^2$) representative of the data contained in said modulated signal, said receiver being **characterised in that** said demodulation means include:
   - a complex filter (116) arranged to receive said first and second signals, and to provide in response fourth and fifth analog signals (X3, Y3) so that, when the frequency of said first and second signals is equal to said first frequency, respectively to said second frequency, the gain of the transfer function (H3) is equal to a first gain value (G1), respectively to a second gain value (G2) which is different to said first gain value;
   - first and second normalisation means (118, 120) arranged to receive respectively said fourth and fifth signals, and to provide in response a sixth analog signal ($X3^2$) respectively a seventh analog signal ($Y3^2$) representing a standard of said fourth signal, respectively of said fifth signal; and
   - a first adder (122) arranged to receive said sixth and seventh signals and to provide in response said third analog signal ($X3^2+Y3^2$) representing the sum of said sixth and seventh signals.

2. Receiver (110) according to claim 1, **characterised in that** said complex filter (116) includes:

   - a second adder (124), a first integrator (140) and a first amplifier (128) connected in series, said second adder being able to receive said first signal (I) and said first amplifier being able to provide said fourth signal (X3);
   - a third adder (126), a second integrator (142) and a second amplifier (130) connected in series, said third adder being able to receive said second signal (Q) and said second amplifier being able to provide fifth signal (Y3); and
   - third, fourth, fifth and sixth amplifiers (132, 136, 134, 138), said second adder also receiving said fourth signal (X3) via said third amplifier (132), as well as said fifth signal (Y3) via said fourth amplifier (136), and said third adder also receiving said fifth signal (Y3) via said fifth amplifier (134), as well as said fourth signal (X3) via said sixth amplifier (138).

3. Receiver (110) according to claim 2, **characterised in that** it further includes first and second variable gain amplifiers connected so that said conversion means (3) provides said modulation means (112) with said first and second signals (I, Q), via said first and second variable gain amplifiers, respectively.

4. Receiver (110) according to claim 1, **characterised in that** said first and second normalisation means (118, 120) are arranged so that said standard corresponds to a « 2m power » function, the reference m designating an integer number which is not zero.

5. Receiver (110) according to claim 1, **characterised in that** said first and second normalisation means (118, 120) are arranged so that said standard corresponds to the « absolute value » function.

6. Receiver (110) according to claim 1, **characterised in that** it further includes shaping means (114) arranged to receive said seventh signal ($X3^2+Y3^2$) and to provide in response an eighth digital signal (Vo), so that this latter is equal to a low level (« 0 »), respectively to a high level (« 1 »), when said seventh signal is less, respectively greater than a predetermined threshold comprised between the standards of said first and second gain values.

7. Receiver (110) according to claim 6, **characterised in that** the shaping means (114) is formed by a comparator with N-1 thresholds, the reference N designating an integer number greater than or equal to 2, corresponding to the number of frequency shifts.

**Patentansprüche**

1. Empfänger (110) mit direkter Umsetzung für frequenzsprungmodulierte Signale, wobei dieser Empfänger umfasst:

- eine Antenne (2), die ein frequenzsprungmoduliertes Signal (S) empfangen kann;
- ein Umsetzungsmittel (3), das das modulierte Signal empfangen und in Reaktion darauf ein erstes und ein zweites analoges Signal (I, Q), die um 90° phasenverschoben sind, liefern kann, wobei diese Signale den Realteil bzw. den Imaginärteil eines komplexen Signals repräsentieren, das wenigstens eine erste, negative Frequenz ($-\Delta f1$) oder eine zweite, positive Frequenz ($+\Delta f1$) hat;
- ein Demodulationsmittel (112), das das erste und das zweite Signal empfangen und in Reaktion darauf ein drittes Signal ($X3^2 + Y3^2$), das die in dem modulierten Signal enthaltenen Informationen repräsentiert, liefern kann,

wobei dieser Empfänger **dadurch gekennzeichnet ist, dass** das Demodulationsmittel umfasst:

- ein komplexes Filter (116), das so beschaffen ist, dass es das erste und das zweite Signal empfängt und in Reaktion darauf ein viertes und ein fünftes analoges Signal (X3, Y3) liefert, derart, dass dann, wenn die Frequenz des ersten und des zweiten Signals gleich der ersten Frequenz bzw. der zweiten Frequenz ist, die Verstärkung der Übertragungsfunktion (H3) gleich einem ersten Verstärkungswert (G1) bzw. einem zweiten Verstärkungswert (G2), der von dem ersten Verstärkungswert verschieden ist, ist;
- erste und zweite Normierungsmittel (118, 120), die so beschaffen sind, dass sie das vierte bzw. das fünfte Signal empfangen und in Reaktion darauf ein sechstes analoges Signal ($X3^2$) bzw. ein siebtes analoges Signal ($Y3^2$) liefern, die eine Norm des vierten Signals bzw. des fünften Signals repräsentieren; und
- einen ersten Summierer (122), der so beschaffen ist, dass er das sechste und das siebte Signal empfängt und in Reaktion darauf das dritte analoge Signal ($X3^2 + Y3^2$), das die Summe des sechsten und des siebten Signals repräsentiert, liefert.

2. Empfänger (110) nach Anspruch 1, **dadurch gekennzeichnet, dass** das komplexe Filter (116) umfasst:

- einen zweiten Summierer (124), einen ersten Integrator (140) und einen ersten Verstärker (128), die in Reihe geschaltet sind, wobei der zweite Summierer das erste Signal (I) empfangen kann und der erste Verstärker das vierte Signal (X3) liefern kann;
- einen dritten Summierer (126), einen zweiten Integrator (142) und einen zweiten Verstärker (130), die in Reihe geschaltet sind, wobei der dritte Summierer das zweite Signal (Q) empfangen kann und der zweite Verstärker das fünfte Signal (Y3) liefern kann; und
- einen dritten, einen vierten, einen fünften und einen sechsten Verstärker (132, 136, 134, 138), wobei der zweite Summierer außerdem über den dritten Verstärker (132) das vierte Signal (X3) und über den vierten Verstärker (136) das fünfte Signal (Y3) empfängt und der dritte Summierer außerdem über den fünften Verstärker (134) das fünfte Signal (Y3) und über den sechsten Verstärker (138) das vierte Signal (X3) empfängt.

3. Empfänger (110) nach Anspruch 2, **dadurch gekennzeichnet, dass** er außerdem einen ersten und einen zweiten Verstärker mit variabler Verstärkung umfasst, die in der Weise angeschlossen sind, dass das Umsetzungsmittel (3) an das Demodulationsmittel (112) das erste und das zweite Signal (I, Q) über den ersten bzw. den zweiten Verstärker mit variabler Verstärkung liefert.

4. Empfänger (110) nach Anspruch 1, **dadurch gekennzeichnet, dass** das erste und das zweite Normierungsmittel (118, 120) so beschaffen sind, dass die Norm einer Funktion "Potenz 2m" entspricht, wobei die Zahl m eine von Null verschiedene ganze Zahl bezeichnet.

5. Empfänger (110) nach Anspruch 1, **dadurch gekennzeichnet, dass** das erste und das zweite Normierungsmittel (118, 120) so beschaffen sind, dass die Norm der Funktion "Absolutwert" entspricht.

6. Empfänger (110) nach Anspruch 1, **dadurch gekennzeichnet, dass** er außerdem ein Formungsmittel (114) umfasst, das so beschaffen ist, dass es das siebte Signal ($X3^2 + Y3^2$) empfängt und in Reaktion darauf ein achtes digitales Signal (Vo) liefert, derart, dass dieses letztere gleich einem Tiefpegel ("0") bzw. einem Hochpegel ("1") ist, wenn das siebte Signal kleiner bzw. größer als eine vorgegebene Schwelle ist, die zwischen den Normen des ersten und des zweiten Verstärkungswertes liegt.

7. Empfänger (110) nach Anspruch 6, **dadurch gekennzeichnet, dass** das Formungsmittel (114) durch einen Komparator mit N - 1 Schwellen gebildet ist, wobei die Zahl N eine ganze Zahl größer oder gleich 2 bezeichnet, die der Anzahl der Frequenzsprünge entspricht.

Fig. 1
( ART ANTERIEUR )

EP 1 014 637 B1

Fig. 2
(ART ANTERIEUR)

Fig. 3 A
(ART ANTERIEUR)

Fig. 4
(ART ANTERIEUR)

Fig. 5
(ART ANTERIEUR)

Fig. 6
(ART ANTERIEUR)

## Fig. 3B
### (ART ANTERIEUR)

# Fig. 7
( ART ANTERIEUR )

EP 1 014 637 B1

Fig. 8

# Fig. 9

Fig. 10

Fig. 11

# Fig. 12

EP 1 014 637 B1

Fig. 13

Fig. 14